# EUROPEAN PATENT SPECIFICATION

(11) **EP 2 687 738 B1**
(45) Date of publication and mention of the grant of the patent: **09.09.2015**
(21) Application number: 12290241.4
(22) Date of filing: 20.07.2012
(51) Int. Cl.: F16C 27/04, F16C 27/06, F16C 35/073, F16C 25/08, F16C 19/16, B62D 1/16, B60R 16/027

(54) **Angular contact bearing assembly for use in a steering column and method for assembling a steering column**
Schrägkugellageranordnung zur Verwendung in einer Lenksäule und Verfahren zur Montage einer Lenksäule
Ensemble de roulement à contact angulaire destiné à être utilisé dans une colonne de direction et procédé d'assemblage d'une colonne de direction

(43) Date of publication of application: 22.01.2014
(73) Proprietor: Aktiebolaget SKF, 415 50 Göteborg (SE)
(72) Inventor: Bussit, Sylvain, 37380 Monnaie (FR); Jansen, Daniel, 37000 Tours (FR); Lepine, Thomas, 37510 Villandry (FR); Montboeuf, Bruno, 37390 Cerelles (FR)
(74) Representative: Kohl, Thomas

(56) References cited:
- EP-A1- 1 184 583
- FR-A1- 2 782 758
- US-B1- 6 375 360

## Description

The invention relates to an angular contact bearing assembly in a steering column.

Steering columns in automobiles are generally equipped with angular contact ball bearing assemblies comprising a conductive inner ring with a concave recess forming a first raceway, a conductive outer ring with a concave recess forming a second raceway and a set of conductive balls contacting both the first raceway and the second raceway. In order to simplify the mounting of the inner ring on a central shaft of the steering column, the inner ring is mounted on the shaft via a sleeve or tolerance ring, which is usually moulded of non-conductive plastics in order to allow for some flexibility and to reduce the costs.

Steering wheels mounted on the shaft often contain electrical switches or devices and/or airbags, which may be affected by electrostatic charges accumulating on the steering wheel.

It is therefore important to ensure an electrical grounding of the steering wheel by ensuring a conductive contact between the shaft of the steering column and the chassis of the automobile via the angular ball bearings. As a matter of course, this conductive contact could be used for transmitting electrical signals as well.

The document US 4,530,609 teaches to make the sleeve conductive by using a graphite-filled polymer material, which is, however, fairly expensive.

In order to ensure the electrical contact mentioned above, the document FR 2782758 A1 teaches to use a conductive part creating an electrically conductive contact between the inner ring and the shaft. This conductive part is a generally ring-shaped member arranged between an axial end face of the sleeve and a wavy spring or ondular washer generating an axial preload of the angular bearing. The wavy spring is preloaded with a fixing ring fitted over the shaft.

The ring-shaped member is provided with a ring-shaped main body and a latch bent around the profile of the sleeve so as to overlap with a surface supporting the inner ring such that the inner ring is in contact with the latch. The electrically conductive contact between the outer ring and the shaft is therefore established from the outer ring via the balls, the inner ring, the latch, the main body of the ring-shaped member, the wavy spring, and the fixing ring.

A similar solution with a conductive element having a ring-shaped main body and multiple latch-like axial protrusions engaging in slots of the sleeve is proposed in the document US 6,675,360 B1.

A solution where the tongues or latches are integrally formed with the wavy spring is proposed in US 2010/0308569A1. A solution where latches are formed on the inner ring is proposed in DE 102 20 688 B4.

In this conductive pathway, there is a high number of contact points which are susceptible to degradation or interruption of the contact and the total probability of failure accumulates the individual probabilities. This imposes narrow limits on the tolerances of the parts.

The invention has been made in an attempt to solve these problems and proposes an angular contact bearing assembly according to claim 1.

The angular contact bearing assembly for use in a steering column according to the invention comprises at least one rolling bearing comprising conductive components, a sleeve for mounting the at least one conductive rolling bearing on a shaft, and at least one conductive part creating an electrically conductive contact between one of the conductive components and the shaft.

The conductive components of the at least one conductive rolling bearing may comprise in particular a conductive inner ring with a concave recess forming a first raceway, a conductive outer ring with a concave recess forming a second raceway, and a set of conductive balls contacting both the first raceway and the second raceway.

The invention proposes to provide the at least one conductive part with a first contact portion to the at least one conductive rolling bearing, a second contact portion to the shaft, and a force transmission portion connecting the first contact portion and second contact portion. The conductive part, in particular the force transmission portion, is arranged such that the pressure applied to the first contact portion and/or to the second contact portion is at least partially transferred to the other contact portion respectively. At least one of the three portions is elastically deformable.

The conductive part is formed as a clip snapped on a brim of the sleeve. This facilitates the assembly and reduces the amount of material needed for the conductive part such that the overall costs of the angular contact bearing assembly may be reduced. During the general mounting process, at least one rolling bearing is first mounted on the sleeve equipped with the said at least one conductive part. The contact on the first contact portion is formed between the at least one rolling bearing and the at least one conductive part. It creates a deformation of at least one portion of the conductive part, enabling a displacement of the second contact portion via the force transmission portion. When the shaft is then mounted inside the sleeve equipped with the said at least one conductive part, it creates another deformation of at least one portion of the conductive part. A contact pressure is then created between the shaft and the at least one conductive part in one hand, and between the at least one conductive rolling bearing and the at least one conductive part in the other hand, ensuring an electrically conductive pathway through the three elements.

The contact portions are preloaded upon mounting the sleeve in or on the inner ring or on the shaft and the pressure transferred according to the invention leads to an increase of the contact pressure to the inner ring when the sleeve is mounted on the shaft and vice versa.

As a consequence, a good contact can be ensured in a simple way, the tolerances of the parts may be increased and the costs of the assembly may be reduced.

Here and in the following, the expressions "electrical contact to the shaft" and "electrical contact to the conductive component" do not necessarily mean that the conductive part is in direct contact to these items. Rather, the contact may be established via an intermediate part, e.g. a retainer ring.

Further, it is proposed that the conductive part is configured such that a gap between the conductive part and the sleeve is formed at least in the first and/or second elastically deformable contact portion. More precisely, the gap should be formed at a back surface of the conductive part corresponding to the front surface contacting the rolling bearing or the shaft. This allows for elastic deformations as a result of the application of pressure to the contact portions. Preferably, the conductive part is arcuate in the contact portion and the surface of the sleeve below the contact portion is flat or formed with a curvature smaller than the curvature of the conductive part such that the conductive part is supported like an arcuate leaf spring on the pertinent support part of the sleeve. Preferably, the one end of this contact portion in the form of a leaf spring continues to the force transmission portion and the opposite end may abut to a step preventing a displacement of this end in a direction perpendicular to the main deformation direction of the elastically deformable contact portion such that the pressure is effectively transferred to the force transmission portion and supported by the step.

The effects of the invention are particularly pronounced if the elastically deformable contact portion contacting the conductive component, the inner ring or the shaft is configured such that it is deformed and preloaded when fitting the assembly including the sleeve and the conductive part over the shaft or when fitting the conductive inner ring over the sleeve.

Multiple conductive parts may be distributed over the circumference of the sleeve may be used. Preferably, this distribution is homogenous and in a preferred embodiment, each conductive part is complemented by a corresponding part arranged diametrically opposite with respect to a symmetry axis of sleeve.

A wavy spring generating a preload of the angular contact bearing may be formed separately from the conductive part and provides more freedom for the choice of materials. Preferably, the conductive part is formed as a stamped sheet metal piece and the sleeve is made of plastic.

If the sleeve is provided with a recess, the clip may be secured in the circumferential direction, an unconscious shifting or loosening of the clip may be avoided, and the probability of failures may be reduced further.

Similar advantages may be achieved when the angular contact bearing assembly comprises an axial recess in a brim of the sleeve in addition to a recess in the circumferentially outer or inner surface of the sleeve or instead of such a recess.

It is further proposed that the recess extends from a radially inner surface of the sleeve to a radially outer surface of the sleeve, wherein the radially inner surface is configured to be fitted over a shaft and the radially outer surface is configured to support the conductive inner ring. In this configuration, the conductive part may be almost completely arranged in the recess so as to provide a good protection against loosening during the assembly, wherein only the contact portions designed to establish the contact to the inner ring and/or to the shaft might protrude from the recess.

The failure probability may be further reduced by means of redundancy by providing the assembly with multiple conductive parts distributed over the circumference of the sleeve. Preferably, these multiple conductive parts have an identical shape.

A further aspect of the invention relates to a steering column for an automotive vehicle comprising a chassis with a mounting support, a shaft and at least one angular contact bearing assembly of the type discussed above mounted on the chassis mounting support and supporting the shaft.

The above embodiments of the invention as well as the appended claims and figures show multiple characterizing features of the invention in specific and non-limiting combinations. The skilled person will easily be able to consider further combinations or sub-combinations of these features in order to adapt the invention as defined in the claims to his or her specific needs.
- Fig. 1: is a schematic view of a steering column with an angular contact bearing assembly according to the invention;
- Fig. 2: is a perspective view of a sleeve of the angular contact bearing assembly of Figure 1;
- Figs. 3a - 3c: are different views of a clip-like conductive part of the angular contact bearing assembly of Figure 1;
- Fig. 4: is a sectional view of the angular contact bearing assembly with the sleeve and the conductive part of Figs. 2 and 3;
- Figs. 5a - 5c: are different views of a clip-like conductive part of the angular contact bearing assembly according to a second embodiment of the invention; and
- Fig. 6: is a sectional view of the angular contact bearing assembly with the conductive part of Figs. 5a - 5c.

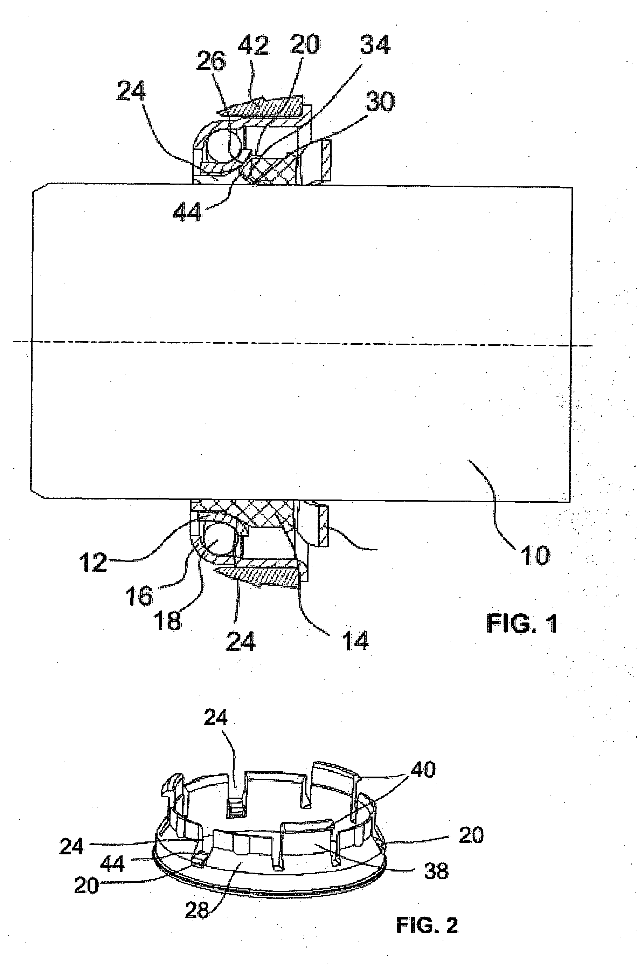

Fig. 1 is a schematic sectional view of an angular contact bearing assembly in a steering column of an automobile. The bearing assembly is mounted on a central shaft 10 connecting a steering wheel with steering rods (not shown).

The angular contact bearing assembly comprises a rolling bearing having conductive components. In particular, the rolling bearing comprises a conductive inner ring 12 with a concave recess forming a first raceway. The inner ring 12 is formed as a stamped and hardened sheet-metal piece in the illustrated embodiment, but could be made massive in the alternative.

The inner ring 12 is mounted on the shaft 10 via a plastic sleeve 14 contacting a conical inner surface of the inner ring 12 and has a certain elasticity such that the inner surface of the sleeve 14 is deformed radially inward when the inner ring 12 is pressed on the sleeve 14 such that a force-fitting connection between the inner ring 12 and the sleeve 14 is established.

Further, the angular contact bearing assembly comprises a conductive outer ring 16 with a concave recess forming a second raceway and being mounted in electrical contact with the chassis and the grounding of the automobile. The outer ring 16 is formed as a stamped a hardened sheet-metal piece in the illustrated embodiment, but could be made massive in the alternative.

The outer ring 16 is mounted in a chassis mounting support 42 of a steering column of an automotive vehicle.

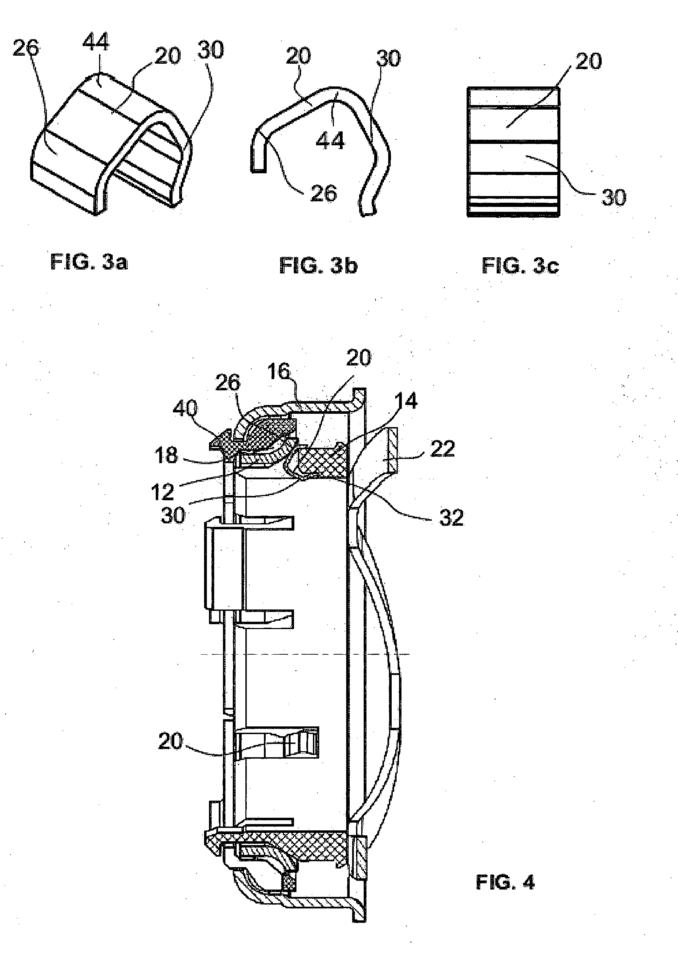

A set of conductive balls 18 contacting both the first raceway and the second raceway is guided in a cage 40 (Fig. 4) and establishes an electrically conductive contact between the inner ring 12 and the outer ring 16.

As the sleeve 14 is non-conductive, a means for creating an electrically conductive contact between the inner ring 12 and the shaft 10 is needed on order enable a discharging of static electricity from the shaft 10 to the chassis of the automobile because accumulating static electricity could affect the function of electrical or electronical elements arranged on the steering wheel and/or electrical shocks.

In order to create this electrically conductive contact, the invention proposes to provide least one conductive part 20 creating an electrically conductive contact between the inner ring 12 and the shaft 10. In contrast to other known conductive parts of this type, the conductive part 20 is not provided with a ring-shaped main body, i.e. has a circumferential extension with reference to the rotation axis of the shaft 10 of less than 360°.

In the embodiment of Figs. 1 - 4, three identical conductive parts 20 are provided which are formed as a clip snapped on a brim of the sleeve 14 respectively. The circumferential extension of this clip or the angular range as referred to the central axis of the shaft 10 covered by this clip is clearly less than 10°, even less than 5°.

The angular contact ball bearing is preloaded with a corrugated or wavy spring 22 or an ondular washer abutting to an axial end surface of the sleeve 14 in order to generate an axial preload of the angular contact bearing assembly. The wavy spring 22 is a part separate from the conductive part 20 and made of elastic steel, whereas the conductive part 20 may optionally be coated with or made of copper or other highly conductive materials.

Fig. 2 is a perspective view of the sleeve 14 of the angular contact bearing assembly of Figure 1. The sleeve 14 is provided with three recesses 24 with a circumferential extension or width slightly wider than the width of the conductive part 20. The recesses 24 are large enough to enable a free movement of the conductive part 20 in the radial and axial directions.

The recess 24 comprises an axial recess in a brim of the sleeve 14 and extends from a radially inner surface 32 of the sleeve 14 to a radially outer surface 28 of the sleeve 14, wherein the radially inner surface 32 is configured to be fitted over a shaft 10 and the radially outer surface 28 is configured to support the conductive inner ring 12. Though the first embodiment illustrated here is provided with three conductive parts 20, it is clearly possible to use more or less conductive parts 20 distributed over the circumference of the sleeve 14 and clipped in pertinent recesses respectively. The brim is provided with further axial slots creating radially flexible latches 38. Three of the latches are provided with snap-fitting protrusions 40 projecting radially outward and having a chamfered end-face. The snap-fitting protrusions 40 will snap over an axially outer edge of the outer ring 16 such that the sleeve 14 loosely fixes the inner ring 12 to the outer ring 16.

Figs. 3a, 3b and 3c illustrate different views of the conductive part 20 prior to assembly and Fig. 4 shows the sleeve 14 and the conductive part 20 of the first embodiment in a sectional view. The conductive part 20 is provided with a first flexible contact portion 26 contacting the conductive inner ring 12, wherein said first flexible portion 26 is configured such that it is deformed and preloaded when fitting the conductive inner ring 12 over the sleeve 14. This means that the first flexible contact portion 26 projects radially and axially over the conical outer surface 28 of the sleeve 14 in the non-preloaded state prior to fitting the inner ring 12 onto the assembly.

In a similar way, the conductive part 20 is provided with a second flexible portion 30 configured to contact the shaft 10, wherein said second flexible portion 30 is configured such that it is deformed and preloaded when fitting the assembly including the sleeve 14 and the conductive part 20 over the shaft 10. In other words, the second flexible portion 30 projects radially inward over the cylindrical inner surface 32 of the sleeve 14 in the unpreloaded state prior to fitting the sleeve 14 onto the shaft 10 and is pushed radially outward when the shaft 10 is pushed into the assembly from the left hand side or from the right hand side in Fig. 4.

The conductive part 20 has a generally C-shaped body part configured to be snapped on a brim or into one of the recesses 24 of the sleeve 14. A center of the body part constitutes a force transmission portion 44 connecting the first contact portion 26 with the second contact portion 30.

The assembly is illustrated in its mounted configuration in the sectional view of Fig. 1. Since pressure is exerted on both the first flexible portion 26 and the second flexible portion of the conductive part 20, the conductive part 20 is compressed radially such that its central part is lifted off the bottom of the recess 24 in the sleeve. The elastic restoring force of the conductive part 20 generates a contact pressure by which the first flexible portion 26 and the second flexible portion of the conductive part 20 are strongly pressed against the shaft 10 and the inner ring 12 respectively, such that a good electrical contact is ensured.

The conductive part 20 is arcuate in the contact portions 26, 30 and the surface of the sleeve 14 in the bottom of the recess 24 below the respective contact portion 26, 30 is flat such that the conductive part 20 is supported like an arcuate leaf spring on the pertinent support part of the sleeve 14. One end of both contact portions 26, 30 in the form of a leaf spring continues to the band-like force transmission portion 44 and the opposite end abuts to a step preventing a displacement of this end in a longitudinal direction perpendicular to the main deformation direction of the elastically deformable contact portion 26, 30 respectively, such that the pressure is effectively transferred to the force transmission portion 44 and supported by the step.

From the force transmission portion 44, the pressure is then transferred to the other one of the first and second elastically deformable contact portions 26, 30, where it increases the contact pressure ensuring the electrical contact to the shaft 10 or to the inner ring 12.

Upon mounting the conductive part 20 pre-assembled with the sleeve 14 on the shaft 10, the pressure generated due to the deformation of the second elastically deformable contact portion 30 is partially transferred via the force transmission portion 44 onto the first elastically deformable contact portion 26 so as to increase the contact pressure thereof. In order to effect this, the force transmission portion 44 is bent and moved in its longitudinal direction in response to the elastic deformation of the second contact portion 30 and a width of a gap between the conductive part 20 and the bottom of the recess 24 in the sleeve 14 is increased.

When the sleeve 14 is inserted or pressed into the inner ring 12, the first contacting portion 26 comes into contact with the radially inner conical surface of the inner ring 12 and is pressed radially inward by this surface such that the second contacting portion 30 is moved radially inward such that it protrudes over the radially inner surface 32 of the sleeve 14 up to a radius smaller than the radius of the shaft 10. The free end of the conductive part 20 is bent radially outward again such that it is safely outside of the radius of the shaft 10 before the shaft 10 is inserted. When inserting the shaft 10 with its chamfered end into the sleeve 14, the second contacting portion 30 is pressed radially outward and the second contacting portion 30 is deformed until the free end adjacent to the second contacting portion 30 comes to abutment with a step 44 formed in the sleeve 14. Further radial pressure exerted on the second contacting portion 30 will be supported by the first contacting portion 26, which may be lifted off its support on the sleeve 14. The pressure of the first contacting portion 26 onto the inner ring 12 will increase such that the reliability of the electric contact between the first contacting portion 26 and the inner ring 12 is improved by inserting the shaft 14.

When the shaft 10 is inserted, a pressure is applied onto the second contact portion (30). This pressure leads to an elastic deformation of at least the force transmission portion 44.

A restoring force of the elastic deformation of the force transmission portion 44 is at least partially transferred back to the first contact portion 26, 30 and increases a contact pressure with which the first contact portion 26 thrusts on the inner ring 12.

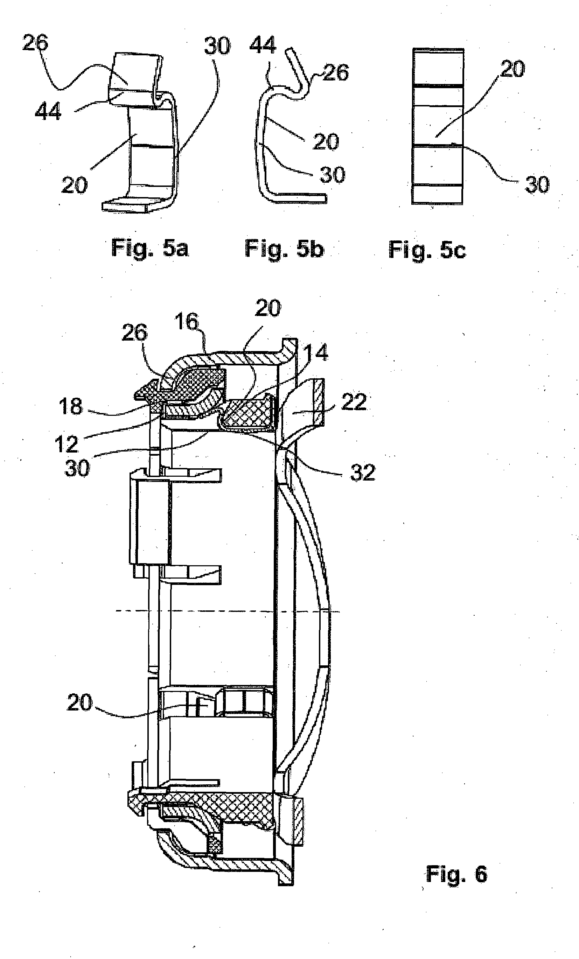

Figures 5 - 6 show further embodiments of the invention. The following description focuses on differences to the embodiment of Figs. 1 - 4, whereas the reader should refer to the foregoing description of Figs. 1 - 4 for the explanation of features which are essentially unchanged. Similar or identical features are provided with the same reference numbers in order to highlight the similarities.

Figs. 5a - 5c illustrate a clip-like conductive part 20 of the angular contact bearing assembly according to a second embodiment of the invention and Fig. 6 is a sectional view of the angular contact bearing assembly with the conductive parts 20 of Fig. 5a - 5c. The characteristic feature of this embodiment is that the first flexible portion 26 contacting the conductive inner ring 12 is formed as a tongue protruding from one end of a C-shaped body part of the conductive part 20.

## Claims

1. Angular contact bearing assembly for use in a steering column, comprising:
- at least one rolling bearing comprising conductive components;
- a sleeve (14) for mounting the at least one conductive rolling bearing on a shaft (10); and
- at least one conductive part (20) creating an electrically conductive contact between at least one of the conductive components (12) of the at least one rolling bearing and the shaft (10), said conductive part (20) is provided with a first contact portion (26) to the at least one conductive rolling bearing, a second contact portion (30) to the shaft (10), and a force transmission portion (44) connecting the first contact portion (26) and the second contact portion (30),
**characterized in that** the conductive part (20) is formed as a clip snapped on a brim of the sleeve (14) such that a pressure applied to the first contact portion (26) and/or to the second contact portion (30) is at least partially transferred to the other contact portion (26, 30) respectively, and at least one of the portions (26; 30; 44) is elastically deformable.

2. Angular contact bearing assembly according to claim 1,
**characterized in that**
the at least one rolling bearing comprises:
- a conductive inner ring (12) with a concave recess forming a first raceway;
- a conductive outer ring (16) with a concave recess forming a second raceway;
- a set of conductive rolling elements (18) contacting both the first raceway and the second raceway.

3. Angular contact bearing assembly according to claim 1 or 2,
**characterized in that** the conductive part (20) is configured such that a gap between the conductive part (20) and the sleeve (14) is formed at least in the first and/or second elastically deformable contact portion (26, 30).

4. Angular contact bearing assembly according to one of claims 1 to 3, **characterized in that** the sleeve (14) is provided with a recess (24) receiving and laterally guiding at least a force transmission portion (44) connecting the first contact portion (26) and the second contact portion (30).

5. Angular contact bearing assembly according to one of the preceding claims, **characterized in that** the conductive component is a conductive inner ring (12) and **in that** first elastically deformable contact portion (26) is configured for contacting the conductive inner ring (12) is configured such that it is deformed and preloaded when fitting the conductive inner ring (12) over the sleeve (14).

6. Angular contact bearing assembly according to one of the preceding claims, **characterized in that** the second elastically deformable contact portion (30) configured to contact the shaft (10) such that it is deformed and preloaded when fitting the assembly including the sleeve (14) and the conductive part (20) over the shaft (10).

7. Angular contact bearing assembly according to one of claims 1 - 6, **characterized by** being provided by multiple conductive parts (20) distributed over the circumference of the sleeve (14).

8. Angular contact bearing assembly according to one of the preceding claims, **characterized by** further comprising a wavy spring (22) abutting to an axial end face of the sleeve (14) in order to generate an axial preload of the angular contact bearing assembly, wherein said wavy spring (22) is separate from the conductive part (20).

9. Steering column for an automotive vehicle comprising a chassis with a mounting support, a shaft and at least one angular contact bearing assembly according to one of the previous claims mounted on the chassis mounting support and supporting the shaft.

## Patentansprüche

1. Schrägkugellageranordnung zur Verwendung in einer Lenksäule, umfassend:
- mindestens ein Wälzlager, das leitfähige Bauteile umfasst;
- eine Buchse (14) zum Anbringen des mindestens einen leitfähigen Wälzlagers an einer Welle (10); und
- mindestens ein leitfähiges Teil (20), das einen elektrisch leitfähigen Kontakt zwischen mindestens einem der leitfähigen Bauteile (12) des mindestens einen Wälzlagers und der Welle (10) herstellt, wobei das leitfähige Teil (20) mit einem ersten Kontaktabschnitt (26) mit dem mindestens einen leitfähigen Wälzlager, einem zweiten Kontaktabschnitt (30) mit der Welle (10) und einem Kraftübertragungsabschnitt (44), der den ersten Kontaktabschnitt (26) und den zweiten Kontaktabschnitt (30) verbindet, versehen ist,
**dadurch gekennzeichnet, dass** das leitfähige Teil (20) als Clip ausgebildet ist, der auf einen Rand der Buchse (14) aufgeschnappt ist, so dass ein an den ersten Kontaktabschnitt (26) und/oder an den zweiten Kontaktabschnitt (30) angelegter Druck zumindest teilweise auf den anderen Kontaktabschnitt (26 bzw. 30) übertragen wird, und mindestens einer der Abschnitte (26; 30; 44) elastisch verformbar ist.

2. Schrägkugellageranordnung nach Anspruch 1,
**dadurch gekennzeichnet, dass**
das mindestens eine Wälzlager Folgendes umfasst:
- einen leitfähigen Innenring (12) mit einer konkaven Aussparung, die einen ersten Laufring ausbildet;
- einen leitfähigen Außenring (16) mit einer konkaven Aussparung, die einen zweiten Laufring ausbildet;
- einen Satz leitfähiger Rollelemente (18), die den ersten Laufring und den zweiten Laufring berühren.

3. Schrägkugellageranordnung nach einem der Ansprüche 1 oder 2, **dadurch gekennzeichnet, dass** das leitfähige Teil (20) so konfiguriert ist, dass ein Spalt zwischen dem leitfähigen Teil (20) und der Buchse (14) mindestens in dem ersten und/oder zweiten elastisch verformbaren Kontaktabschnitt (26, 30) ausgebildet ist.

4. Schrägkugellageranordnung nach einem der Ansprüche 1 bis 3, **dadurch gekennzeichnet, dass** die Buchse (14) mit einer Aussparung (24) versehen ist, die mindestens einen Kraftübertragungsabschnitt (44), der den ersten Kontaktabschnitt (26) und den zweiten Kontaktabschnitt (30) verbindet, aufnimmt und lateral führt.

5. Schrägkugellageranordnung nach einem der vorhergehenden Ansprüche, **dadurch gekennzeichnet, dass** das leitfähige Bauteil ein leitfähiger Innenring (12) ist und dass der erste elastisch verformbare Kontaktabschnitt (26) zum Berühren des leitfähigen Innenrings (12) derart konfiguriert ist, dass er beim Passen des leitfähigen Innenrings (12) über die Buchse (14) verformt und vorbelastet wird.

6. Schrägkugellageranordnung nach einem der vorhergehenden Ansprüche, **dadurch gekennzeichnet, dass** der zweite elastisch verformbare Kontaktabschnitt (30) zum Berühren der Welle (10) derart konfiguriert ist, dass er beim Passen der Anordnung mit der Buchse (14) und dem leitfähigen Teil (20) über die Welle verformt und vorbelastet wird.

7. Schrägkugellageranordnung nach einem der Ansprüche 1 bis 6, **dadurch gekennzeichnet, dass** sie mit mehreren leitfähigen Teilen (20) versehen ist, die über den Umfang der Buchse (14) hinweg verteilt sind.

8. Schrägkugellageranordnung nach einem der vorhergehenden Ansprüche, **dadurch gekennzeichnet, dass** sie ferner eine Wellfeder (22) umfasst, die zum Erzeugen einer axialen Vorbelastung der Schrägkugellageranordnung an eine axiale Endfläche der Buchse (14) anstößt, wobei die Wellfeder (22) separat vom leitfähigen Teil (20) ist.

9. Lenksäule für ein Kraftfahrzeug, umfassend ein Chassis mit einer Montagestütze, einer Welle und mindestens einer Schrägkugellageranordnung gemäß einem der vorhergehenden Ansprüche, die an der Chassismontagestütze angebracht ist und die Welle stützt.

## Revendications

1. Ensemble de roulement à contact angulaire destiné à être utilisé dans une colonne de direction, comprenant :
- au moins un palier de roulement comprenant des composants conducteurs ;
- un manchon (14) pour fixer l'au moins un palier de roulement conducteur sur un arbre (10) ; et
- au moins une partie conductrice (20) créant un contact électriquement conducteur entre au moins un des composants conducteurs (12) de l'au moins un palier de roulement et l'arbre (10), ladite partie conductrice (20) est pourvue d'une première partie de contact (26) sur l'au moins un palier de roulement conducteur, une seconde partie de contact (30) sur l'arbre (10), et une partie de transmission de force (44) raccordant la première partie de contact (26) et la seconde partie de contact (30),
**caractérisé en ce que** la partie conductrice (20) prend la forme d'un clip pressionné sur un bord du manchon (14) de telle sorte qu'une pression appliquée à la première partie de contact (26) et/ou à la seconde partie de contact (30) soit au moins partiellement transférée à l'autre partie de contact (26, 30) respectivement, et au moins l'une des parties (26 ; 30 ; 44) est déformable élastiquement.

2. Ensemble de roulement à contact angulaire selon la revendication 1, **caractérisé en ce que** l'au moins un palier de roulement comprend :
- une bague intérieure conductrice (12) avec un renfoncement concave formant un premier chemin de roulement ;
- une bague extérieure conductrice (16) avec un renfoncement concave formant un second chemin de roulement ;
- un ensemble d'éléments de roulement conducteurs (18) entrant en contact tant avec le premier chemin de roulement qu'avec le second chemin de roulement.

3. Ensemble de roulement à contact angulaire selon la revendication 1 ou 2, **caractérisé en ce que** la partie conductrice (20) est configurée de telle sorte qu'un espace entre la partie conductrice (20) et le manchon (14) soit formé au moins dans la première et/ou la seconde partie de contact déformable élastiquement (26, 30).

4. Ensemble de roulement à contact angulaire selon l'une quelconque des revendications 1 à 3, **caractérisé en ce que** le manchon (14) est pourvu d'un renfoncement (24) recevant et guidant latéralement au moins une partie de transmission de force (44) raccordant la première partie de contact (26) et la seconde partie de contact (30).

5. Ensemble de roulement à contact angulaire selon l'une quelconque des revendications précédentes, **caractérisé en ce que** le composant conducteur est une bague intérieure conductrice (12) et **en ce que** la première partie de contact (26) déformable élastiquement est configurée pour entrer en contact avec la bague intérieure conductrice (12) de telle sorte qu'elle soit déformée et préchargée lors de la mise en place de la bague intérieure conductrice (12) sur le manchon (14).

6. Ensemble de roulement à contact angulaire selon l'une quelconque des revendications précédentes, **caractérisé en ce que** la seconde partie (30) de contact déformable élastiquement est configurée pour entrer en contact avec l'arbre (10) de telle sorte qu'elle soit déformée et préchargée lors de la mise en place de l'ensemble comprenant le manchon (14) et la partie conductrice (20) sur l'arbre (10).

7. Ensemble de roulement à contact angulaire selon l'une quelconque des revendications 1 à 6, **caractérisé en ce qu'**il est pourvu de multiples parties conductrices (20) réparties sur l'ensemble de la circonférence du manchon (14).

8. Ensemble de roulement à contact angulaire selon l'une quelconque des revendications précédentes, **caractérisé en ce qu'**il comprend en outre un ressort ondulé (22) butant contre une face d'extrémité axiale du manchon (14) afin de générer une précharge axiale de l'ensemble de roulement à contact angulaire, dans lequel ledit ressort ondulé (22) est séparé de la partie conductrice (20).

9. Colonne de direction pour un véhicule automobile comprenant un châssis avec un support de fixation, un arbre et au moins un ensemble de roulement à contact angulaire selon l'une quelconque des revendications précédentes fixé sur le support de fixation de châssis et supportant l'arbre.
